# EUROPÄISCHE PATENTANMELDUNG

(11) **EP 2 251 185 A1**
(43) Veröffentlichungstag der Anmeldung: **17.11.2010**
(21) Anmeldenummer: 09159894.6
(22) Anmeldetag: 11.05.2009
(51) Int. Cl.: B29C 67/00, A61C 13/00

(54) **Verfahren und Vorrichtung zur generativen Herstellung eines Formkörpers mit non-planaren Schichten**

(71) Anmelder: Ivoclar Vivadent AG, 9494 Schaan (LI); Technische Universität Wien, 1040 Wien (AT)
(72) Erfinder: Rohner, Gottfried, CH-9450, Altstätten (CH); Wachter, Wolfgang, FL-9494, Schaan (LI); Stampfl, Jürgen, A-1040, Wien (AT); Patzer, Johannes, A-1110, Wien (AT); Homa, Johannes, A-1130, Wien (AT)
(74) Vertreter: UEXKÜLL & STOLBERG

(57) **Zusammenfassung**

Die vorliegende Erfindung betrifft ein Verfahren zur generativen Herstellung eines Formkörpers (27), insbesondere eines Grünlings für eine Dentalrestauration, aus unter Einwirkung von elektromagnetischer Strahlung verfestigbarem Material (5, 55) mittels einer Mehrzahl von Belichtungsschritten (1001, 1002, 1003, 1004), **dadurch gekennzeichnet, dass** vor einem Belichtungsschritt (1001, 1002, 1003, 1004) eine neue Schicht aus unter Einwirkung von elektromagnetischer Strahlung verfestigbarem Material (5, 55) mit einer Schichtdicke bereitgestellt wird, die kleiner oder gleich der Hälfte der Eindringtiefe der elektromagnetischen Strahlung in das verfestigbare Material (5, 55) ist, in dem Belichtungsschritt (1001, 1002, 1003, 1004) die bereitgestellte Schicht nur in einem Teilbereich (2001, 3001) der auszubildenden Formkörperschicht belichtet wird, wobei eine vor einem vorhergehenden Belichtungsschritt bereitgestellte Schicht, auf der die neue Schicht bereitgestellt wird, zusammen mit der neuen Schicht im belichteten Teilbereich (2001, 3001) verfestigt wird, und zwischen den Belichtungsschritten (1001, 1002, 1003, 1004) der belichtete Teilbereich (2001, 3001) variiert wird.

## Beschreibung

Die vorliegende Erfindung betrifft ein Verfahren und eine Vorrichtung zur generativen Herstellung eines Formkörpers aus unter Einwirkung von elektromagnetischer Strahlung verfestigbarem Material mittels einer Mehrzahl von Belichtungsschritten. Die Erfindung ist insbesondere auf den Aufbau von Formkörpern gerichtet, die als Grünling für Dentalrestaurationen verwendet werden sollen.

CAD-CAM-Technologien haben in der Dentalbranche schon seit einiger Zeit Einzug gehalten und lösen die traditionelle handwerkliche Herstellung von Zahnersatz ab. Die heute üblichen abtragenden Herstellungsverfahren zur Erzeugung von keramischen Dentalrestaurationskörpern haben aber einige Nachteile, die nach heutigem Stand der Technik mit vernünftigem Aufwand unter wirtschaftlichen Aspekten nicht verbessert werden können. In diesem Zusammenhang können aufbauende Herstellungsverfahren, die unter der Bezeichnung "generative Fertigung" in Betracht gezogen werden, insbesondere stereolithographische Verfahren, bei denen jeweils eine neu aufgetragene Materialschicht durch ortsselektive Belichtung in der gewünschten Form polymerisiert wird, wodurch sukzessive durch schichtweise Formgebung der gewünschte Körper in seiner dreidimensionalen Form, die sich aus der Aufeinanderfolge der aufgebrachten Schichten ergibt, hergestellt wird.

Problematisch bei der schichtweisen Herstellungsweise aus photopolymerisierbarem Material ist der Zusammenhalt der einzelnen Schichten untereinander. Bei angreifenden Scherkräften der Schichten gegeneinander können diese den Haftkontakt zueinander verlieren und der Formkörper kann delaminieren.

Es ist daher die Aufgabe der vorliegenden Erfindung, ein Verfahren und eine Vorrichtung zur generativen Herstellung eines Formkörpers aus unter Einwirkung von elektromagnetischer Strahlung verfestigbarem Material bereitzustellen, wobei eine erhöhte Festigkeit des Formkörpers erreicht wird.

Zur Lösung dieser Aufgabe dienen das Verfahren nach Anspruch 1 und die Vorrichtung nach Anspruch 5. Vorteilhafte Ausführungsformen der Erfindung sind Gegenstand der jeweiligen Unteransprüche.

Das erfindungsgemäße Verfahren ist **dadurch gekennzeichnet, dass** vor einem Belichtungsschritt eine neue Schicht aus unter Einwirkung von elektromagnetischer Strahlung verfestigbarem Material mit einer Schichtdicke bereitgestellt wird, die kleiner oder gleich der Hälfte der Eindringtiefe der elektromagnetischen Strahlung in das verfestigbare Material ist, in dem Belichtungsschritt dann die bereitgestellte Schicht nur in einem Teilbereich der auszubildenden Formkörperschicht belichtet wird, wobei eine vor einem vorhergehenden Belichtungsschritt bereitgestellte Schicht, auf der die neue Schicht bereitgestellt wurde, zusammen mit der neuen Schicht im belichteten Teilbereich verfestigt wird, und zwischen den Belichtungsschritten der belichtete Teilbereich variiert wird. Durch die wechselnde Teilbelichtung kommt es also zur Ausbildung verzahnter, non-planarer Schichten.

Mit dem erfindungsgemäßen Verfahren wird erreicht, dass die einzelnen Schichten keine ganzflächige Verbindungsstelle miteinander bilden, sondern jede Schicht, mit Ausnahme der ersten und letzten Schicht, in einem Teilbereich mit der darüber liegenden Schicht in einem Belichtungsschritt zusammen verfestigt wurde und in einem anderen Teilbereich mit der darunter liegenden Schicht in einem anderen Belichtungsschritt zusammen verfestigt wurde. Die erste und letzte Schicht wird hierbei jeweils in einem Teilbereich nur zusammen mit der nachfolgenden bzw. vorhergehenden Schicht verfestigt. Dadurch wird ein besonders gut verzahnter Schichtverband mit erhöhter Haftfestigkeit der einzelnen Schichten untereinander erreicht, und somit eine erhöhte Festigkeit des Formkörpers erreicht wird. Es sei an dieser Stelle angemerkt, dass nicht der gesamte Formkörper ausschließlich aus derart verzahnten Schichten bestehen muss, sondern bestimmte Bereiche, wie etwa seitliche Randbereiche oder außen liegende Schichten, planare Schichtverbindungen ohne eine derartige Verzahnung aufweisen können. Eine über einen Großteil des Formkörpers erreichte Verzahnung der Schichten untereinander garantiert allerdings, dass der Formkörper selbst bei hohen Scherkräften zwischen den Schichten nicht delaminiert.

Bei dem erfinderischen Verfahren ist zum einen zu beachten, dass die Eindringtiefe der elektromagnetischen Strahlung in das verfestigbare Material über mindestens zwei Schichten reicht, sodass pro Belichtungsschritt zumindest zwei Schichten zusammen in dem belichteten Teilbereich ausreichend verfestigt werden, und zum anderen, dass vor jedem Belichtungsschritt eine neue Schicht bereitgestellt wird. Direkt belichtet wird dabei zwar nur die direkt vor dem Belichtungsschritt bereitgestellte Schicht im Teilbereich, aber die elektromagnetische Strahlung erreicht auch eine oder mehr darunter liegende Schichten, die vor zuvor durchgeführten Belichtungsschritten bereitgestellt wurden.

Die Eindringtiefe der elektromagnetischen Strahlung in das verfestigbare Material ist im Rahmen dieser Erfindung als die Tiefe definiert, über die das verfestigbare Material ausreichend stark verfestigt, wenn das verfestigbare Material in einem Belichtungsschritt über einen definierten Zeitraum mit elektromagnetischer Strahlung definierter Intensität und definiertem Wellenlängenspektrum ausgesetzt wird. Dem Fachmann wird in diesem Zusammenhang einleuchten, dass sich die maximale Schichtdicke des erfindungsgemäßen Verfahrens von der Dauer und der Art der Belichtung abhängen kann. Bei einer Verwendung einer Belichtungseinheit mit mittlerer Intensität von 0,1 mW/cm² bis 100 mW/cm² und einer Belichtungszeit pro Belichtungsschritt von 6s kann sich eine Eindringtiefe der elektromagnetischen Strahlung in das verfestigbare Material von etwa 50-250 µm ergeben, wobei vorteilhafterweise eine Schichtdicke von 25 µm oder weniger gewählt wird. Die Eindringtiefe der elektromagnetischen Strahlung in das verfestigbare Material ist neben der oben genannten Art und Weise der Belichtung auch abhängig vom verwendeten verfestigbaren Material. Das verfestigbare Material kann insbesondere verschiedene Arten von Absorbern aufweisen, wobei durch die Wahl des verwendeten Absorbers maßgeblich die Eindringtiefe der elektromagnetischen Strahlung in das verfestigbare Material mitbestimmt wird.

In einer bevorzugten Ausführungsform kann vorgesehen sein, dass jeweils während eines einzelnen Belichtungsschrittes die Lichtleistung, insbesondere kontinuierlich, erhöht wird, um ein besseres Durchhärten in größeren Tiefen zu erreichen

Es sei angemerkt, dass sich die belichteten Teilbereiche zwischen aufeinander folgenden Belichtungsschritten durchaus überschneiden können, sodass auch auf bereits verfestigte Bereiche von einer oder mehr tiefer liegenden Schichten die elektromagnetische Strahlung einwirkt. Es ist allerdings bevorzugt, dass sich die zwischen den Belichtungsschritten variierten Teilbereiche im Wesentlichen nicht überlagern und zur auszubildenden Formkörperschicht ergänzen. "Im Wesentlichen" heißt hierbei, dass dabei nicht sichergestellt werden muss, dass es nicht den geringsten Überlapp in den Randbereichen zwischen den belichteten Teilbereiche geben kann, der unter anderem durch Streulichteffekte eintreten kann, sondern einen geringfügigen Überlapp in den Randbereichen zwischen den belichteten Teilbereichen geben kann. Damit wird vorteilhafterweise erreicht, dass jeder Teilbereich einer Schicht, abgesehen von Streulichteffekten, nur in genau einem Belichtungsschritt und einer genau definierten Belichtungszeit dem Einfluss der elektromagnetischen Strahlung ausgesetzt wird.

Die auszubildende Formkörperschicht wird also vorzugsweise in zwei oder mehr Teilbereichen, die im Wesentlichen keine Schnittmenge miteinander bilden, über entsprechend viele Belichtungsschritte belichtet, wobei in aufeinanderfolgenden Belichtungsschritten immer ein anderer der Teilbereiche belichtet wird. Da zwischen den Belichtungsschritten immer eine neue Schicht bereitgestellt wird, sollte dabei die Eindringtiefe der elektromagnetischen Strahlung in das verfestigbare Material mindestens über so viele Schichten reichen wie verschiedene Teilbereiche belichtet werden.

Die Anzahl von Teilbereichen, die sich zur auszubildenden Formkörperschicht ergänzen, ist also nicht auf zwei beschränkt. Insbesondere für den Fall, dass die Schichtdicke so dünn gewählt ist, dass die Eindringtiefe der elektromagnetischen Strahlung in das verfestigbare Material über mehr als zwei Schichten reicht, können entsprechend viele Teilbereiche definiert werden, beispielsweise durch die Verwendung von entsprechenden Belichtungsmasken. Dann können pro Belichtungsschritt in jedem Teilbereich so viele Schichten zusammen verfestigt werden wie es die Eindringtiefe der elektromagnetischen Strahlung in das verfestigbare Material erlaubt.

Es kann weiterhin von Vorteil sein, wenn ein erster Teilbereich mit einer ersten Belichtungsmaske belichtet wird und ein zweiter Teilbereich mit einer zweiten Belichtungsmaske belichtet wird, wobei die erste Belichtungsmaske zur zweiten Belichtungsmaske im Wesentlichen komplementär ist und in jedem zweiten Belichtungsschritt mit der einen Belichtungsmaske und in den jeweils anderen Belichtungsschritten mit der anderen Belichtungsmaske belichtet wird. Beispielsweise kann die Geometrie des ersten Teilbereichs wie die hellen Flächen eines Schachbrettmusters ausgestaltet sein und die Geometrie des zweiten Teilbereichs wie die dunklen Flächen eines Schachbrettmusters, es sind aber auch andere zueinander komplementäre Muster beliebig einsetzbar. Bei dieser Ausführungsform muss die Eindringtiefe vorteilhafterweise nur über zwei Schichten reichen.

Der Begriff "Belichtungsmaske" ist hier im weitesten Sinne so zu verstehen, dass darunter jede Form der Intensitätsmodulation fällt, bei der ein definiertes Intensitätsmuster mit gewünschten Teilbereichen auf das Belichtungsfeld abgebildet wird. Als Belichtungsmasken können analoge Abdeckmasken oder digitale Maskenfelder wie sogenannte DLP-Chips (digital light processing chips) dienen, wie beispielsweise Mikrospiegelfelder, LCD-Felder und dergleichen, die angesteuert werden können, um ein bestimmtes Intensitätsmuster mit gewünschten Teilbereichen auf das Belichtungsfeld abzubilden. Alternativ kann die Belichtungsmaske auch ein vorprogrammiertes Ablaufprogramm eines Laserstrahls sein, bei dem der Laserstrahl das Belichtungsfeld nur in einem gewünschten Teilbereich sukzessive abtastet und nur dort das Material verfestigt.

Der mit dem erfindungsgemäßen Verfahren generativ herzustellende Formkörper kann zum Beispiel ein Grünling für eine Dentalrestauration sein, wobei das unter Einwirkung von elektromagnetischer Strahlung verfestigbare Material ein lichtpolymerisierbares Material wie etwa ein keramikgefülltes Photopolymer sein kann.

Vorzugsweise kann bei dem erfindungsgemäßen Verfahren zur Herstellung des Formkörpers ein Kunststoff verwendet werden, wobei der Formkörper nach dessen Herstellung in einer Einbettmasse eingebettet und nach Erstarrung der Einbettmasse ausgebrannt wird und wobei die entstandenen Hohlräume in der Einbettmasse ein anderes Material, insbesondere ein Dentalkeramikmaterial oder Metall oder eine Legierung eingepresst wird.

Bei einem bevorzugten Verfahren kann für die Herstellung des Formkörpers ein Dentalkomposit verwendet werden und der Formkörper nach dessen Herstellung vergütet und anschließend poliert oder lackiert und anschließend vergütet werden.

Vorzugsweise besteht bei einem erfindungsgemäßen Verfahren der Keramikanteil des keramikgefüllten Photopolymers aus einer Oxidkeramik oder einer Glaskeramik, insbesondere Zirkoniumoxid, Aluminiumoxid, Lithiumdisilikat, Leuzitglaskeramik, Apatit-Glaskeramik oder Mischungen daraus.

Die erfindungsgemäße Vorrichtung ist **dadurch gekennzeichnet, dass** sie eine Belichtungseinheit, eine erste und zweite Belichtungsmaske, eine Beschichtungseinheit und eine Steuereinheit aufweist. Dabei ist die Belichtungseinheit in der Lage, eine auszubildende Formkörperschicht mit elektromagnetischer Strahlung zu belichten. Die erste Belichtungsmaske erlaubt nur die Belichtung eines ersten Teilbereichs der auszubildenden Formkörperschicht und die zweite Belichtungsmaske erlaubt nur die Belichtung eines zweiten Teilbereichs der auszubildenden Formkörperschicht, wobei sich der erste Teilbereich vom zweiten Teilbereich unterscheidet. Die Beschichtungseinheit ist in der Lage, eine neue Schicht aus unter Einwirkung von elektromagnetischer Strahlung verfestigbarem Material mit einer Schichtdicke bereitzustellen, die kleiner oder gleich der Hälfte der Eindringtiefe der elektromagnetischen Strahlung in das verfestigbare Material ist. Schließlich ist die Steuereinheit dazu ausgestaltet und vorbereitet, die Vorrichtung so zu steuern, dass in einem Belichtungsschritt eine mit der Beschichtungseinheit zuvor bereitgestellte neue Schicht mit der ersten Belichtungsmaske belichtet wird und in dem darauffolgenden Belichtungsschritt eine mit der Beschichtungseinheit zuvor bereitgestellte nächste neue Schicht mit der zweiten Belichtungsmaske belichtet wird.

Mit der erfindungsgemäßen Vorrichtung wird in besonders schneller und genauer Weise ermöglicht, dass die einzelnen Schichten, mit Ausnahme der ersten und letzten Schicht, in einem Teilbereich mit der darüber liegenden Schicht in einem Belichtungsschritt zusammen verfestigt wurde und in einem anderen Teilbereich mit der darunter liegenden Schicht in einem anderen Belichtungsschritt zusammen verfestigt wurde. Die erste und letzte Schicht wird hierbei jeweils in einem Teilbereich nur zusammen mit der nachfolgenden bzw. vorhergehenden Schicht verfestigt.

Vorzugsweise weist die Beschichtungseinheit eine Wanne mit einem wenigstens teilweise lichtdurchlässig ausgebildeten Bodenbereich auf, in die lichtpolymerisierbares Material einfüllbar ist, dass eine Bauplattform mit einem Hubmechanismus über dem Wannenboden gehalten ist, so dass ihre Höhe relativ zum Wannenboden einstellbar ist, und dass die Steuereinheit dazu vorbereitet ist, nach jedem Belichtungsschritt für eine Schicht die Relativposition der Bauplattform zum Wannenboden durch Steuerung des Hubmechanismus anzupassen.

Dadurch wird ermöglicht, dass in besonders schneller Weise besonders dünne Schichten mit gleichmäßiger und definierter Beschichtungsdicke und Schichtdicke bereitgestellt werden können. In Bezug auf die erfindungsgemäße Vorrichtung ist hier unter "Beschichtungsdicke" die von der Beschichtungseinheit bereitgestellte Dicke des verfestigbaren Materials zu verstehen, in das die Bauplattform bzw. bereits verfestigte Schichten des Formkörpers für einen folgenden Belichtungsschritt eingetaucht wird. Die von der Beschichtungseinheit bereitgestellte "Schichtdicke" kann sich dagegen bei einer bestimmten Eintauchtiefe aus dem Abstand zwischen dem lichtdurchlässigen Wannenboden und der Bauplattform bzw. der zuletzt in einem Teilbereich verfestigten Schicht des Formkörpers ergeben. Die auf dem Wannenboden bereitgestellte Beschichtungsdicke aus verfestigbarem Material kann beispielsweise 300 µm betragen, sodass die Bauplattform bzw. die zuletzt in einem Teilbereich verfestigte Schicht 275 µm tief in das verfestigbare Material eingetaucht werden kann, um eine Schichtdicke von 25 µm zwischen dem lichtdurchlässigen Wannenboden und der Bauplattform bzw. der zuletzt in einem Teilbereich verfestigten Schicht zu erreichen.

Es ist dabei vorteilhaft, wenn die Belichtungseinheit unterhalb des Wannenbodens zur Belichtung durch den wenigstens teilweise lichtdurchlässigen Wannenboden hindurch von unten angeordnet ist. Damit kann direkt und ohne komplizierte Lichtstrahlführung von unten belichtet werden.

In einer bevorzugten Ausführungsform der erfindungsgemäßen Vorrichtung ist in dem Hubmechanismus ein mit der Steuereinheit verbundener Kraftaufnehmer vorhanden, der in der Lage ist, die von dem Hubmechanismus auf die Bauplattform ausgeübte Kraft zu messen und das Messergebnis an die Steuereinheit zu senden, wobei die Steuereinheit dazu vorbereitet ist, die Bauplattform mit einem vorgegebenen Kraftverlauf zu bewegen.

Insbesondere bei keramikgefüllten lichtpolymerisierbaren Materialien können aufgrund der hohen Viskosität beim Herunterfahren in das oder beim Herauffahren der Bauplattform aus dem viskosen Material große Kräfte auftreten, die durch das Verdrängen beziehungsweise Ansaugen des viskosen Materials zwischen Bauplattform und Wannenboden bedingt sind. Um die auftretenden Kräfte zu beschränken und dennoch eine möglichst hohe Absenk- beziehungsweise Anhebegeschwindigkeit zu ermöglichen, was den Produktionsprozess insgesamt beschleunigt, kann die Steuereinheit durch eine Kraftmessung den Hubmechanismus in optimaler Weise kraftgesteuert einsetzen.

Um eine möglichst gleichmäßige und exakt vorgebbare Beschichtungsdicke von lichtpolymerisierbarem Material über dem Wannenboden zu erreichen, ist die erfindungsgemäße Vorrichtung vorzugsweise folgendermaßen aufgebaut. Die Wanne ist in horizontaler Richtung bezüglich der projizierenden Belichtungseinheit und der Bauplattform beweglich. In Bewegungsrichtung der Wanne vor Belichtungseinheit und Bauplattform ist eine Aufbringvorrichtung, beispielsweise eine Rakel oder eine Rolle, angeordnet, deren Höhe über dem Wannenboden einstellbar ist. Die mit einer Unterkante parallel zum Wannenboden verlaufende Aufbringvorrichtung streicht das lichtpolymerisierbare Material auf eine einheitliche Dicke glatt, bevor es den Polymerisationsbereich zwischen Belichtungseinheit und Bauplattform erreicht.

Vorteilhafterweise kann die Wanne um eine zentrale Drehachse drehbar gelagert sein, wobei die projizierende Belichtungseinheit unter dem Wannenboden und die Bauplattform darüber in radialer Richtung versetzt gegenüber der zentralen Drehachse liegen, dass ein Antrieb vorgesehen ist, der in der Lage ist, unter Steuerung der Steuereinheit die Wanne zwischen aufeinanderfolgenden Belichtungsschritten um einen vorgegebenen Winkel um die zentrale Drehachse zu drehen, wobei eine Zuführeinrichtung zum Zuführen von lichtpolymerisierbaren Material in die Wanne, die Aufbringvorrichtung und die Belichtungseinheit in Bewegungsrichtung aufeinander folgen.

Durch diesen Aufbau wird eine besonders kompakte Anordnung der Bestandteile der Vorrichtung erreicht. Dabei ist es bevorzugt, wenn in Drehrichtung hinter dem Bereich der projizierenden Belichtungseinheit ein in vorgebbarer Höhe über dem Wannenboden positionierbarer Wischer vorgesehen ist, der für eine erneute Verteilung des Materials nach dem Verfestigungsprozess im belichteten Teilbereich ausgestaltet ist.

Bei allen Ausführungsformen können als Lichtquelle der Belichtungseinheit Leuchtdioden dienen. Vorzugsweise sind dabei die Leuchtdioden dazu ausgelegt, Licht mit unterschiedlichen Lichtwellenlängen zu emittieren.

Es hat sich gezeigt, dass es von Vorteil ist, wenn die Belichtungseinheit Licht mit einer mittleren Intensität von 100 mW/dm² bis 2000 mW/dm², insbesondere 500 mW/dm² bis 2000 mW/dm², auf das Belichtungsfeld projiziert.

Die Erfindung wird im Folgenden anhand eines Ausführungsbeispiels mit Bezug auf die Zeichnungen beschrieben, in denen:
- Fig. 1: eine seitliche Draufsicht, teilweise im Schnitt auf eine erfindungsgemäße Vorrichtung zeigt,
- Fig. 2: eine Draufsicht auf die Vorrichtung aus Figur 1 von oben zeigt,
- Fig. 3 bis 5: zeigen eine Teilansicht der Vorrichtung aus Fig. 1 im Bereich von Bauplattform und Wannen- boden in aufeinanderfolgenden Arbeitsschritten,
- Fig. 6: zeigt auf Draufsicht von oben für eine zweite Ausführungsform der Vorrichtung,
- Fig. 7: eine seitliche Draufsicht, teilweise im Schnitt, auf die Vorrichtung der zweiten Aus- führungsform aus Fig. 6 zeigt,
- Fig. 8: eine Draufsicht von oben auf eine dritte Aus- führungsform der Vorrichtung zeigt,
- Fig. 9a-d: schematisch Ausschnitte eines Querschnitts ei- nes aufzubauenden Formkörpers vor und nach meh- reren Belichtungsschritten zeigen, und
- Fig. 10a,b: schematisch Ausschnitte einer Draufsicht eines aufzubauenden Formkörpers nach jedem zweiten Belichtungsschritt bzw. den dazwischen durchge- führten Belichtungsschritten zeigen.

Das folgende Ausführungsbeispiel bezieht sich auf die Herstellung eines Grünlings für eine Dentalrestauration.

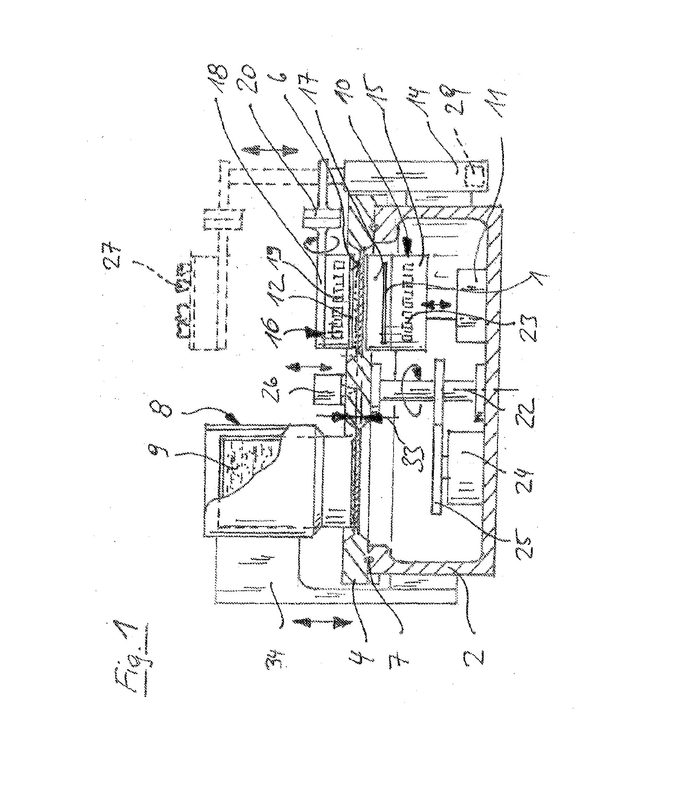

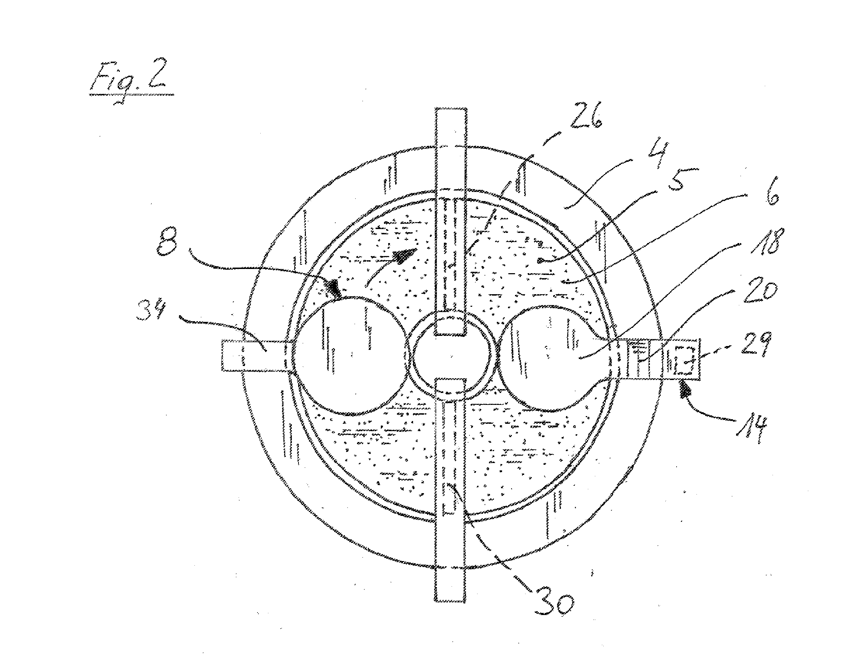

Es werden zunächst mit Bezug auf die Fig. 1 und 2 die Hauptkomponenten der Vorrichtung beschrieben.

Die Vorrichtung weist in der in Fig. 1 und 2 dargestellten Ausführungsform ein Gehäuse 2 auf, das zur Unterbringung und Anbringung der übrigen Komponenten der Vorrichtung dient. Die Oberseite des Gehäuses 2 wird durch eine Wanne 4 bedeckt, die zumindest in den für Belichtungen vorgesehenen Bereichen einen transparenten und ebenen Wannenboden hat.

Unter dem Wannenboden 4 ist in dem Gehäuse 2 eine projizierende Belichtungseinheit 10 vorgesehen, die gesteuert von einer Steuereinheit 11 ein vorgegebenes Belichtungsfeld an der Unterseite des Wannenbodens 6 selektiv mit einem Muster in gewünschter Geometrie belichten kann.

Vorzugsweise weist die projizierende Belichtungseinheit 10 eine Lichtquelle 15 mit einer mehreren Leuchtdioden 23 auf, wobei im Belichtungsfeld vorzugsweise eine Lichtleistung von etwa 15 bis 20 mW/cm² erreicht wird. Die Wellenlänge des von der Belichtungseinheit abgestrahlten Lichts liegt vorzugsweise im Bereich von 350 bis 500 nm. Das Licht der Lichtquelle 15 wird über einen Lichtmodulator 17 ortsselektiv in seiner Intensität moduliert und in dem resultierenden Intensitätsmuster mit gewünschter Geometrie auf das Belichtungsfeld an der Unterseite des Wannenbodens 6 abgebildet. Als Lichtmodulatoren können verschiedene Arten von sogenannten DLP-Chips (digital light processing chips) dienen, wie zum Beispiel Mikrospiegelfelder, LCD-Felder und dergleichen. Alternativ kann als Lichtquelle ein Laser verwendet werden, dessen Lichtstrahl über einen beweglichen Spiegel, der von der Steuereinheit gesteuert werden kann, das Belichtungsfeld sukzessive abtastet.

Über der projizierenden Belichtungseinheit 10 ist jenseits des Wannenbodens 6 eine Bauplattform 12 vorgesehen, die von einem Hubmechanismus 14 mit einem Trägerarm 18 gehalten wird, so dass sie in höhenverstellbarer Weise über dem Wannenboden 6 über der Belichtungseinheit 10 gehalten wird. Die Bauplattform 12 ist ebenfalls transparent oder transluzent.

Über der Bauplattform 12 kann eine weitere Belichtungseinheit 16 angeordnet sein, die ebenfalls von der Steuereinheit 11 angesteuert wird, um bei der Bildung der ersten Schicht unter der Bauplattform 12 auch Licht von oben durch die Bauplattform 12 einzustrahlen, um dadurch eine sichere und verlässlich reproduzierbare Polymerisation und Anhaftung der ersten polymerisierten Schicht an der Bauplattform zu erreichen. Dies ist allerdings bei einer Schichtdicke, die die Hälfte oder weniger als die Eindringtiefe des Lichts in das lichtpolymerisierbare Material beträgt, nicht unbedingt notwendig.

Oberhalb der Oberfläche der Wanne 4 ist ferner eine Zuführeinrichtung 8 mit einem Reservoir in Form einer austauschbare Kartusche 9 gefüllt mit lichtpolymerisierbarem Material vorgesehen. Aus der Zuführeinrichtung 8 kann sukzessive unter Steuerung der Steuereinheit 11 keramikgefülltes lichtpolymerisierbares Material auf den Wannenboden 6 ausgeben werden. Die Zuführeinrichtung wird von einem höhenverstellbaren Träger 34 gehalten.

Die Wanne 4 ist an dem Gehäuse 2 mit einem Lager 7 um eine vertikale Achse 22 drehbar gelagert. Es ist ein Antrieb 24 vorgesehen, der von der Steuereinheit 11 angesteuert die Wanne 4 in eine gewünschte Drehstellung einstellt.

In Drehrichtung zwischen Belichtungseinheit 12 und Zuführeinrichtung 8 kann ein Wischer 30 mit einstellbarer Höhe über dem Wannenboden 6 angeordnet sein, der unterschiedliche Funktionen übernehmen kann, wie weiter unten erläutert.

Wie aus Fig. 2 ersichtlich, liegt zwischen der Zuführeinrichtung 8 und der Belichtungseinheit 12 oberhalb des Wannenbodens 6 eine Aufbringvorrichtung 26, hier in Form einer Rakel 26, die in einstellbarer Höhe über dem Wannenboden 6 positionierbar ist, um so Material, das aus der Zuführeinrichtung 8 auf den Wannenboden 6 ausgegeben worden ist, glattzustreichen, bevor es die Belichtungseinheit 12 erreicht, um dadurch eine gleichmäßige und vorgegebene Beschichtungsdicke sicherzustellen. Alternativ oder zusätzlich zu der Rakel können eine oder mehrere Walzen oder weitere Rakel zu der Aufbringvorrichtung gehören, um in glättender Weise auf die Materialschicht einzuwirken.

Der die Bauplattform 12 tragende Schwenkarm 18 ist über ein Drehgelenk 20 mit dem vertikal verschiebbaren Teil des Hubmechanismus 14 verbunden. In dem Hubmechanismus 14 ist ferner ein Kraftaufnehmer 29 vorgesehen, der die von dem Hubmechanismus 14 beim Absenken bzw. Anheben der Bauplattform 12 auf diese ausgeübte Kraft misst und das Messergebnis zu der Steuereinheit 12 sendet. Diese ist wie weiter unten beschrieben dazu ausgestaltet, um den Hubmechanismus 14 nach eine vorgegebenen Kraftverlauf zu steuern, z.B. die auf die Bauplattform 12 ausgeübte Kraft auf einem Maximalwert zu begrenzen.

Die Funktionsweise der in den Figuren 1 und 2 dargestellten Vorrichtung kann zusammenfassend folgendermaßen beschrieben werden. Aus der Zuführeinrichtung 8 wird gesteuert durch die Steuereinheit eine vorgegebene Materialmenge von keramikgefülltem lichtpolymerisierbaren Material 5 auf den Wannenboden 6 ausgegeben. Durch Ansteuerung des Antriebs 24 veranlasst die Steuereinheit 11 eine Drehung des Wannenbodens 6 um die Drehachse 22, so dass das ausgegebene Material die Aufbringvorrichtung 26, hier einer Rakel, passiert, die das lichtpolymerisierbare Material auf eine vorgegebene Beschichtungsdicke 32 glättet, die durch die Höheneinstellung der Aufbringvorrichtung 26 bestimmt wird. Weiter wird das Material durch Drehung der Wanne 4 bis in den Bereich zwischen der Bauplattform 12 und der Belichtungseinheit 10 bewegt.

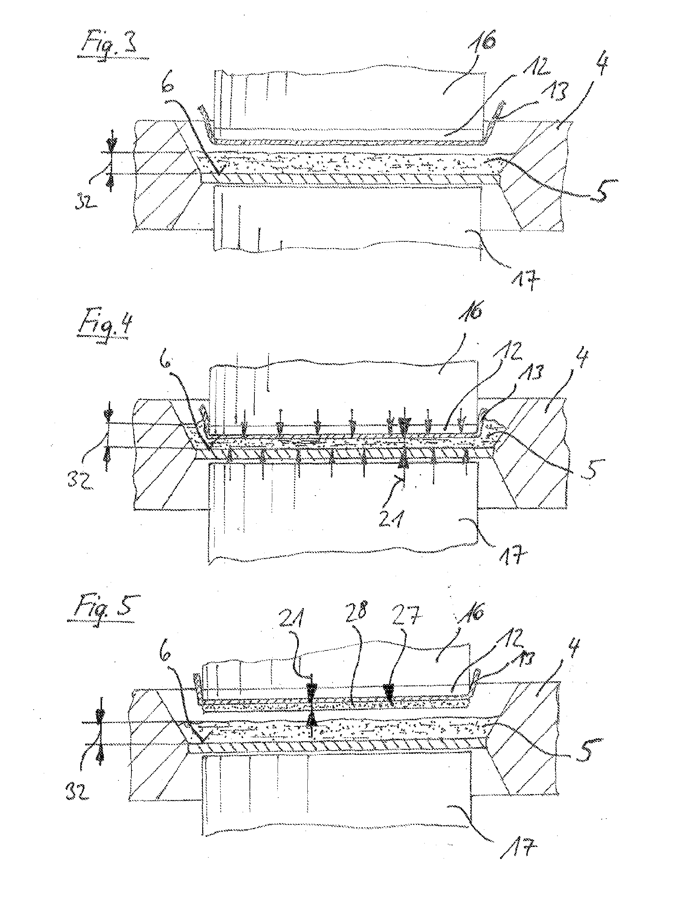

Hier folgt nun, nach Stoppen der Drehbewegung der Wanne 4, das Absenken der Bauplattform 12 in die auf dem Wannenboden 6 gebildete Schicht aus lichtpolymerisierbaren Material 5, was im Folgenden anhand der Fig. 3 bis 5 erläutert wird. In dem in Fig. 3 gezeigten Zustand ist auf dem Wannenboden eine Schicht aus lichtpolymerisierbaren Material 5 mit einer vorgegebenen Dicke 32 gebildet, wobei sich die Bauplattform 12 in diesem Zustand noch oberhalb der Schicht 5 befindet. An der Unterseite der Bauplattform 12 ist eine Folie 13 angebracht, auf die weiter unten eingegangen wird. Aus dem in Fig. 3 dargestellten Zustand erfolgt nun ein Absenken der Bauplattform 12 durch den von der Steuereinheit 11 gesteuerten Hubmechanismus 14, so dass die Bauplattform 12 mit der Folie 13 an der Unterseite in die Schicht aus lichtpolymerisierbaren Material 5 eintaucht und dieses bei weiterem Absenken teilweise aus dem Zwischenraum zwischen der Folie 13 und der oberen Oberfläche des Wannenbodens 6 verdrängt. Durch den Hubmechanismus 14 wird die Bauplattform 12 von der Steuereinheit 11 gesteuert so zu dem Wannenboden abgesenkt, dass eine Schicht mit einer präzise vorgegebenen Schichtdicke 21 zwischen Bauplattform und Wannenboden definiert wird. Dadurch lässt sich die Schichtdicke 21 des zu polymerisierenden Materials präzise steuern.

Beim Eintauchen der Bauplattform 12 in das lichtpolymerisierbare Material 5 und dem weiteren Absenken in die in Fig. 4 gezeigte Stellung könnten insbesondere bei Verdrängung von höher viskosem Material große Kräfte auftreten, wenn das Absenken der Bauplattform mit vorgegebener Geschwindigkeit erfolgen würde. Um zu verhindern, dass die aufzubauenden Materialschichten beim Absenken der Bauplattform 12 in das lichtpolymerisierbare Material 5 zu großen Kräften ausgesetzt ist, ist in dem Hubmechanismus der oben erwähnte Kraftaufnehmer 29 vorhanden, der die auf die Bauplattform 12 ausgeübte Kraft misst und das Messsignal an die Steuereinheit 11 sendet. Diese ist nur dazu vorbereitet, den Hubmechanismus so zu steuern, dass die von dem Kraftaufnehmer 29 erfasste Kraft vorgegebenen Kriterien folgt, insbesondere dass die ausgeübte Kraft eine vorgegebene Maximalkraft nicht überschreitet. Dadurch kann das Absenken der Bauplattform 12 das lichtpolymerisierbare Material 5 hinein und das Anheben der Bauplattform daraus heraus einerseits so gesteuert durchgeführt werden, dass die auf die Bauplattform damit auch auf die bereits gebildeten Schichten ausgeübten Kräfte begrenzt werden und dadurch Beschädigungen beim Aufbau des Formkörpers vermieden werden, und andererseits das Absenken und Anheben der Bauplattform 12 mit der maximal möglichen Geschwindigkeit, bei der Beschädigungen des aufzubauenden Formkörpers gerade noch vermieden werden, durchgeführt werden können, um so eine optimale Prozessgeschwindigkeit zu erreichen.

Nach dem Absenken der Bauplattform in das lichtpolymerisierbare Material 5 in die in Fig. 4 gezeigte Stellung folgt nun der erste Belichtungsschritt zur Polymerisation der ersten Schicht 28 an der Bauplattform 12, wobei dabei auch die weitere Belichtungseinheit 16 betätigt werden kann.

Hierbei wird die Vorrichtung derart von der Steuereinheit gesteuert, dass die erste Schicht mit der Belichtungseinheit durch eine erste Belichtungsmaske belichtet wird, wobei die erste Belichtungsmaske nur die Belichtung eines ersten Teilbereichs der auszubildenden Formkörperschicht erlaubt. Der Rest der ersten Schicht bleibt also nach dem ersten Belichtungsschritt im Wesentlichen unverfestigt.

Während des Belichtungsprozesses bleibt die Wanne 4 ruhig gehalten, d.h. der Antrieb 24 bleibt abgeschaltet. Nach dem Belichten einer Schicht wird die Bauplattform 12 durch den Hubmechanismus 14 angehoben. Dabei wird vorzugsweise aber zunächst vor dem Anheben der Bauplattform 12 eine relative Kippbewegung zwischen der Bauplattform 12 und dem Wannenboden 6 durchgeführt. Diese leichte Kippbewegung soll zu einer mechanisch wenig belastenden Ablösung der zuletzt polymerisierten Schicht des Formkörpers 27 vom Wannenboden 6 dienen. Nach dieser Kippbewegung und Ablösung der zuletzt gebildeten Schicht wird die Transportplattform um eine vorgegebene Strecke angehoben, wie in Fig. 5 gezeigt, so dass die zuletzt gebildete Schicht an dem Formkörper 27 über dem lichtpolymerisierbaren Material 5 liegt.

Anschließend wird wieder Material aus der Zuführeinrichtung 8 ausgegeben und die Wanne 4 durch den Antrieb 24 um einen vorgegebenen Drehwinkel gedreht, wobei das sich an der Rakel vorbeibewegende Material wieder auf eine einheitliche Beschichtungsdicke gebracht wird und eine zweite Schicht bereitgestellt wird.

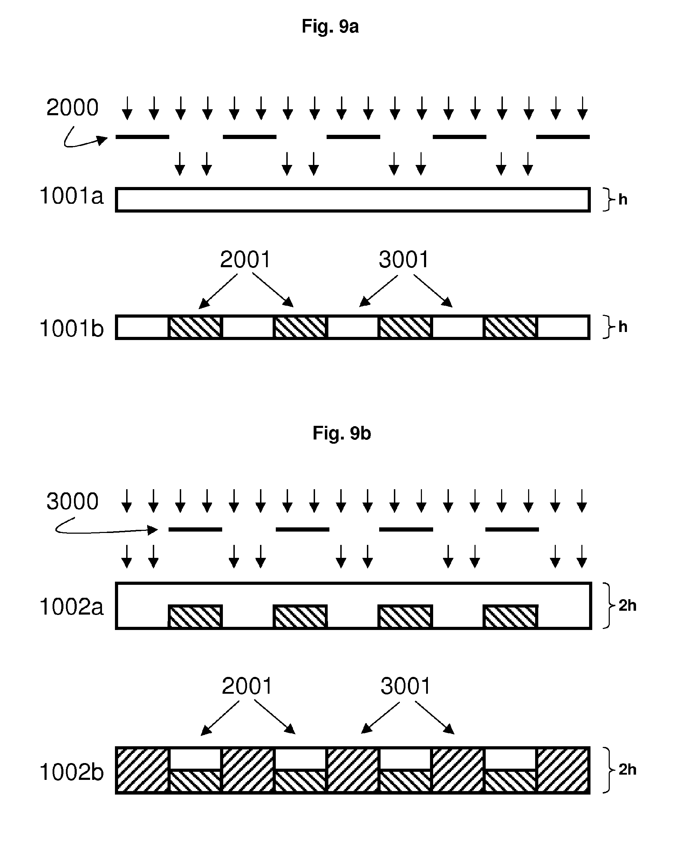

Dann wird die Vorrichtung derart von der Steuereinheit gesteuert, dass der in den Figuren 9a-d schematisch dargestellte Verfahrensablauf durchgeführt wird, der unter detailliert beschrieben ist.

Der hinter der Belichtungseinheit vorgesehene Wischer 30 über dem Wannenboden 6 kann verschiedene Funktionen haben. Er kann zum Beispiel, wenn er ganz auf den Wannenboden 6 abgesenkt ist, dazu dienen, das Material von dem Wannenboden zu sammeln und abzuleiten oder in die Zuführeinrichtung 8 zurückzuführen, was am Ende eines Bauprozesses erfolgen sollte. Während eines Bauprozesses dient der Wischer 30, wenn er leicht gegenüber dem Wannenboden 6 angehoben ist, dazu, das Material wieder zu verteilen, insbesondere wieder Material in die "Löcher" zu schieben, die durch einen Belichtungsprozess in der Materialschicht nach Anheben der Bauplattform 12 entstanden sind.

Nach der Beendigung eines Bauprozesses kann die Bauplattform 12 mit der darüber angebrachten Belichtungseinheit 16 insgesamt durch Schwenken des Schwenkarms 18 um das Gelenk 20 nach oben geschwenkt werden, wie in Figur 1 gestrichelt angedeutet ist. Danach besteht besser Zugang zu der Wanne 4, um diese zum Beispiel reinigen oder austauschen zu können.

Nach dem beschriebenen Aufbau des Grünlings aus polymerisiertem keramikgefüllten Material muss dieser aus der Vorrichtung entnommen und einem Brennofen zugeführt werden, in dem durch die Temperaturbehandlung eine Zersetzung des polymerisierten Bindemittels (Entbindern) herbeigeführt und eine Sinterung des Keramikmaterials durchgeführt wird. Zur Vereinfachung der Handhabung des aufgebauten Körpers ist die Bauplattform so gestaltet, dass sie von dem Trägerarm 18 leicht lösbar ist. Dann kann die Bauplattform mit dem daran haftenden aufgebauten keramikgefüllten Formkörper 27 von ihrem Träger 18 abgenommen und in einem Brennofen platziert werden. Um diese bevorzugte einfache Entnahme des aufgebauten Dentalrestaurationskörpers aus keramikgefüllten Polymer zu ermöglichen, muss die Bauplattform aber aus einem hochtemperaturbeständigen Material hergestellt sein, wozu zum Beispiel Zirkonoxid, Aluminiumoxid, Saphirglas oder Quarzglas dienen können. Als Alternative dazu ist eine selbstklebende, transparente Folie möglich, welche auf der dem Photopolymer zugewandten Seite für eine bessere Anhaftung mit Noppen, Rillen, Ritzen etc. strukturiert sein kann, und welche nach dem Bauprozess durch einfaches Ablösen von der Bauplattform oder samt der Bauplattform abgenommen und samt der Folie in den Brennofen zur Entbinderung/Sinterung gegeben werden kann.

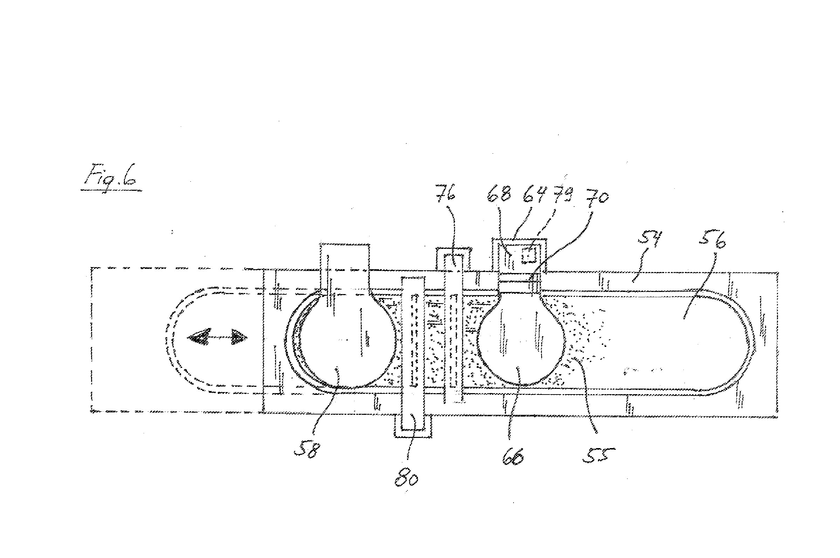

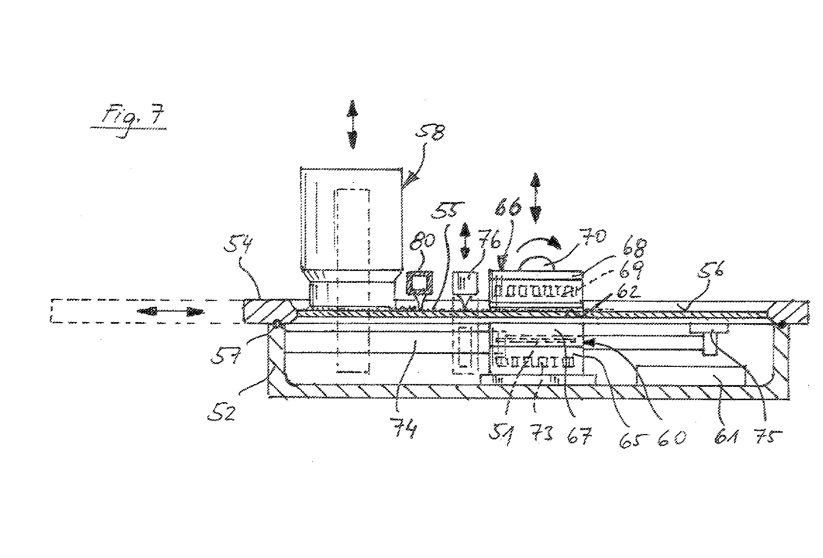

Fig. 6 und 7 zeigen gegenüber der Vorrichtung aus den Fig. 1 und 2 mit drehbarer Wanne eine alternative Ausführungsform, in der die Wanne 54 linear hin und her beweglich ausgestaltet ist. In dieser Ausführungsform ist am Gehäuse 52 eine Wanne 54 linear beweglich in einem Lager 57 gelagert. Oberhalb der Wanne 54 ist die Zuführeinrichtung 58 in höhenverstellbarer Weise angeordnet. In Bezug auf die lineare Bewegungsrichtung versetzt gegenüber der Zuführeinrichtung 58 ist oberhalb der Wanne 54 die Bauplattform 62 an einem Schwenkarm 68 gehalten, der zu einem Hubmechanismus 64 gehört. Der Schwenkarm 68 ist wiederum mit einem Drehgelenk 70 versehen, das es ermöglicht, das der Schwenkarm 68 nach Anheben in vertikaler Richtung sich um 180° drehen lässt, wonach die Bauplattform 62 mit dem darauf aufgebauten Formkörper nach oben zeigt und in dieser Stellung leicht gehandhabt werden kann.

Unterhalb der Bauplattform 62 und des Wannenbodens 56 befindet sich die projizierende Belichtungseinheit 60, in der eine Lichtquelle 65 mit Leuchtdioden 73 angeordnet ist. Das Licht der Lichtquelle 65 wird über einen Lichtmodulator 67 und durch den transparenten Wannenboden 56 auf die Bauplattform 62 projiziert. In der projizierenden Belichtungseinheit 60 ist auch ein Referenzsensor 51 vorhanden, der in einem Kalibrationsschritt dazu verwendet wird, um die tatsächliche Intensitätsverteilung innerhalb des zu belichtenden Teilbereichs aufzunehmen. Aus der Abweichung der tatsächlich erfassten Intensitätsverteilung lässt sich dann durch Umkehrung ein Ansteuerungsprofil (Kompensationsmaske) für den Lichtmodulator berechnen, das für eine tatsächlich gleichmäßige Intensität über den zu belichtenden Teilbereich sorgt. Ein entsprechender Referenzsensor 1 ist auch bei der Ausführungsform aus Fig. 1 und 2 vorhanden.

In Bewegungsrichtung der Wanne 54 (angedeutet durch den Doppelpfeil in den Fig. 6 und 7) sind eine höhenverstellbar über dem Wannenboden 56 gehaltene Aufbringvorrichtung 76, hier in Form einer Rakel, deren Unterkante in einstellbarem Abstand zur Oberfläche des Wannenbodens liegt, und ein Wischer 80 angeordnet.

Die Funktionsweise der in den Fig. 6 und 7 gezeigten Vorrichtung entspricht bis auf den Unterschied der linear hin- und hergehenden Bewegung der Wanne 54 anstelle der Drehbewegung der Wanne 4 den zuvor in Bezug auf die Fig. 3 bis 5 beschriebenen Verfahrensschritten. Zunächst wird die Wanne 54 aus der in Fig. 7 gezeigten Stellung, veranlasst durch die Steuereinheit 61, die den Antrieb 75 betätigt, nach links in die durch gestrichelte Linien gezeigte Stellung verschoben. Dabei wird durch die Zuführeinrichtung 58 lichtpolymerisierbares Material auf den Wannenboden 56 ausgegeben, wobei Menge und zeitlicher Verlauf der Ausgabe ebenfalls von der Steuereinheit 61 vorgegeben werden. Darauf veranlasst die Steuereinheit 61 durch Umkehr des Antriebs 75, dass die Wanne 54 wieder zurück verschoben wird. Dabei passiert das auf den Wannenboden 56 ausgegebene lichtpolymerisierbare Material 55 zunächst den Wischer 80 und dann die Aufbringvorrichtung 76 die für eine gleichmäßige Verteilung und eine einheitliche Beschichtungsdicke des lichtpolymerisierbaren Materials 55 sorgen, bevor dies den Zwischenraum zwischen Bauplattform 62 und projizierender Belichtungseinheit 60 erreicht. Danach wird der Antrieb 75 gestoppt, woraufhin die Schrittfolge wie oben im Zusammenhang mit den Fig. 3 bis 5 beschrieben durchlaufen wird, wobei die Bauplattform 62 in die Schicht aus lichtpolymerisierbaren Material 55 eintaucht und durch Einstellen des Abstands zum Wannenboden eine Schicht mit vorgegebener Dicke zwischen Bauplattform und Wannenboden definiert. Danach erfolgt die Betätigung der projizierenden Belichtungseinheit 60 zur Erzeugung eines Belichtungsmusters mit vorgegebener Geometrie, wobei in diesem Zusammenhang zumindest bei der Erzeugung der ersten Schicht direkt an der Bauplattform 62 auch die weitere Belichtungseinheit 66 mit ihren Leuchtdioden 69 betätigt wird, um eine vollständige Polymerisation und ein verlässliches Anhaften der ersten Schicht an der Bauplattform 62 zu erreichen.

Nach Polymerisation der ersten Schicht mit gewünschter Geometrie wird die Bauplattform 62 durch Betätigen des Hubmechanismus 64 wieder angehoben, so dass die gebildete polymerisierte Schicht über den Spiegel des lichtpolymerisierbaren Materials 55 hinaus angehoben wird.

Daraufhin wiederholt sich die beschriebene Schrittfolge, d.h. die Wanne 54 wird wieder nach links verschoben, lichtpolymerisierbares Material aus der Zuführeinrichtung 58 abgegeben und dieses beim Zurückschieben der Wanne 54 nach rechts durch Wischer 80 und Aufbringvorrichtung 76 gleichmäßig verteilt, woraufhin nach Abschalten des Antriebs 75 der Hubmechanismus 64 die Bauplattform wieder absenkt, so dass die zuletzt gebildete polymerisierte Schicht in das lichtpolymerisierbare Material 55 eintaucht und auf einen vorgegebenen Abstand über dem Wannenboden gebracht wird, um die nun in dem Zwischenraum liegende Materialschicht im nächsten Belichtungsschritt zu polymerisieren. Die Schrittweite der hin- und hergehenden Bewegung kann natürlich wieder variiert werden, um zu vermeiden, dass die Polymerisation immer über derselben Stelle des Wannenbodens durchgeführt wird.

Der Hubmechanismus 64 ist wiederum mit einem Kraftaufnehmer 79 versehen, dessen Messwerte von der Steuereinheit 61 wie oben im Zusammenhang mit der ersten Ausführungsform beschrieben zur Begrenzung der auf die Bauplattform ausgeübten Kraft beim Absenken und Anheben der Bauplattform verwendet werden.

Vorzugsweise können auch Verfahren angewendet werden, bei denen mehrere verschiedene keramikgefüllte photopolymerisierbare Materialien zum Aufbau des Grünlings verwendet werden. Dies kann zum Beispiel dadurch geschehen, dass eine Mehrzahl von Wannen mit jeweils zugeordnetem Reservoir mit verschiedenen Materialien vorgesehen sind. Diese können dann nach Art eines Wechselträgers zu der Belichtungseinheit und der Bauplattform bewegt werden, um in vorgegebener Reihenfolge verschiedene Materialien zu verarbeiten. Dazu können die mehreren Wannen zum Beispiel seriell hintereinander an einem Träger angeordnet sein, der dann linear bezüglich der Belichtungseinheit und der Bauplattform beweglich ist, um jeweils eine gewünschte Wanne bereitzustellen. Alternativ kann eine Mehrzahl von drehbaren Wannen, von denen eine in den Figuren 1 und 2 dargestellt ist, auf einem Kreisring einer größeren Platte angeordnet sein, die ihrerseits wiederum drehbar ist, um jeweils eine gewünschte Wanne durch Einstellung der Drehstellung der Scheibe in die Position zwischen Belichtungseinheit und Bauplattform zu bringen, in der dann der Polymerisationsschicht der jeweiligen Schicht durchgeführt wird.

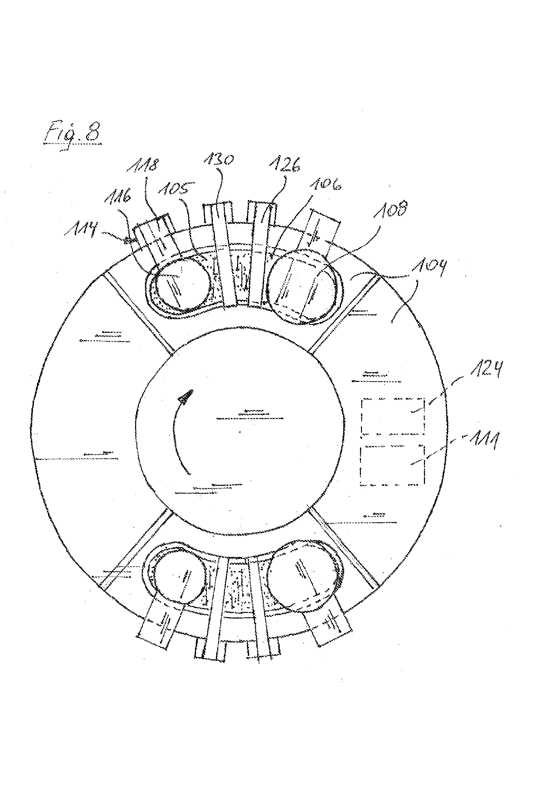

Eine spezielle Ausführungsform einer Vorrichtung, mit der verschiedene lichtpolymerisierbare Materialien zum Aufbau eines Formkörpers verwendet werden können, ist in schematischer Draufsicht von oben in Fig. 8 gezeigt. Hier sind auf einer Drehscheibe in kreisringförmiger Anordnung vier Wannen 104 vorhanden. Die Anordnung von Zuführeinrichtung 108, der weiteren Belichtungseinheit 116 an einem Hubmechanismus 114 sowie des dazwischen liegenden Wischers 130 und der Aufbringvorrichtung 126 ähnelt weitgehend der Anordnung der Vorrichtung aus den Fig. 6 und 7, mit Ausnahme der Tatsache, dass die Komponenten nicht entlang einer linearen Strecke angeordnet und die Wanne linear beweglich ist, sondern die Komponenten entlang eines Kreisringsegments angeordnet sind und die Wanne entsprechend die Form eines Kreisringsegments hat. Zwischen aufeinanderfolgenden Belichtungsschritten in derselben Wanne 104 wird die Wanne hin- und hergehend um einen Winkel von etwa weniger als 90° bewegt, so dass sich wiederum eine hin- und hergehende Bewegung zwischen Zuführeinrichtung 118 und der unter der weiteren Belichtungseinheit 108 befindlichen Bauplattform ergibt.

Soll zu einem bestimmten Zeitpunkt eines von den Materialien aus einer der drei übrigen Wannen 104 verwendet werden, wird die Drehscheibe um einen Winkel entsprechend 90°, 180° oder 270° gedreht, um eine der folgenden Wannen zu der gerade betrachteten Vorrichtung zum Aufbau des Formkörpers zu bringen.

Wie in Fig. 8 unten angedeutet, kann an der Drehscheibe im Bereich eines anderen Kreisringsegments eine weitere Vorrichtung zum Aufbau von Formkörpern vorgesehen sein, die parallel zu der oben gezeigten Vorrichtung arbeiten kann.

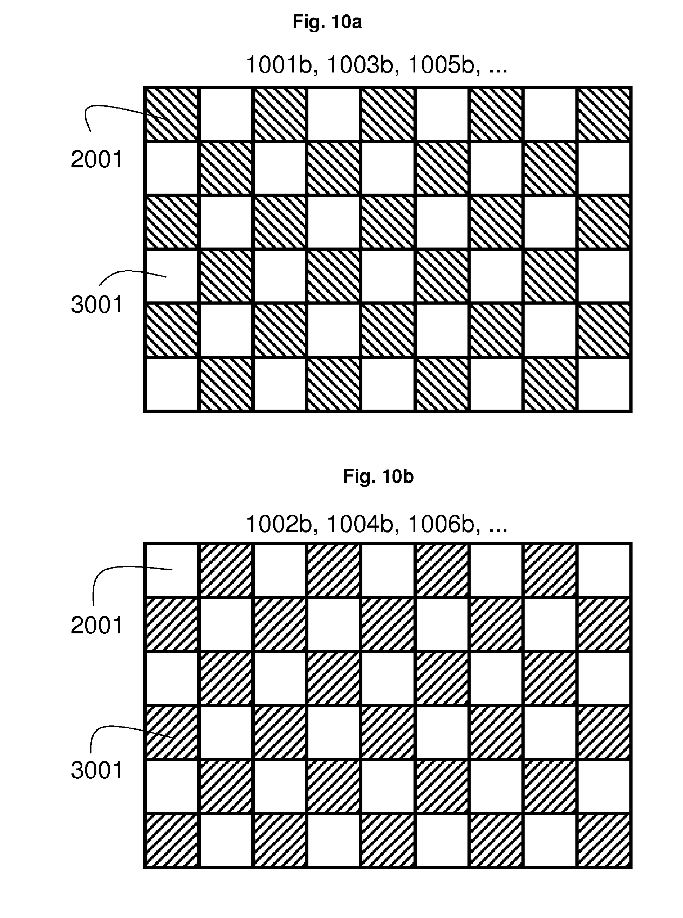

Durch die Figuren 9a-d und 10a,b wird das erfindungsgemäße Verfahren schematisch verdeutlicht, wobei beispielhaft von einer Belichtung der Schichten von oben ausgegangen wird. Vor den einzelnen Belichtungsschritten 1001, 1002, 1003, 1004 wird jeweils eine neue Schicht mit einer Schichtdicke h auf dem bereits aufgebauten Schichtenstruktur bzw. vor dem ersten Belichtungsschritt 1001 an einer Bauplattform 12, 62 bereitgestellt, sodass sich jeweils die Schichtenstruktur 1001a, 1002a, 1003a, 1004a ergibt. Nach den einzelnen Belichtungsschritten 1001, 1002, 1003, 1004 zeigt der aufgebaute Schichtverband die jeweils gezeigte Schichtenstruktur 1001b, 1002b, 1003b, 1004b, wobei die verfestigten Bereiche schraffiert dargestellt sind.

Die ausschnittsweise Querschnittsansicht der Figuren 9a-d verdeutlicht die Verzahnung der Schichten untereinander, die zu der gewünschten Erhöhung der Festigkeit des Formkörpers 27 führt. Wie in Figur 9a gezeigt, ergibt sich nach einem ersten Belichtungsschritt 1001 einer bereitgestellten ersten Schicht mit der ersten Belichtungsmaske 2000 eine Schichtenstruktur 1001b, bei der ein erster Teilbereich 2001 (schraffiert) verfestigt ist und ein zweiter Teilbereich 3001 (nicht schraffiert) noch unverfestigt ist.

Nachdem dann, wie in Figur 9b gezeigt, eine zweite Schicht auf der im zweiten Teilbereich 2001 noch unverfestigten ersten Schicht bereitgestellt und so eine Schichtenstruktur 1002a erreicht worden ist, ergibt sich nach einem zweiten Belichtungsschritt 1002 mit einer zweiten Belichtungsmaske 3000, die zur ersten Belichtungsmaske 2000 komplementär ist, eine Schichtenstruktur 1002b, bei der der zweite Teilbereich 3001 verfestigt ist und der nicht schraffierte erste Teilbereich 2001 der zweiten Schicht noch unverfestigt ist. Es wird hierbei deutlich, dass die Eindringtiefe der elektromagnetischen Strahlung bis über die erste Schicht reicht, sodass diese im zweiten Teilbereich zusammen mit der zweiten Schicht hinreichend verfestigt wird. Nach dem zweiten Belichtungsschritt 1002 ist also die erste Schicht über die gesamte Fläche der auszubildenden Formkörperschicht vollständig verfestigt.

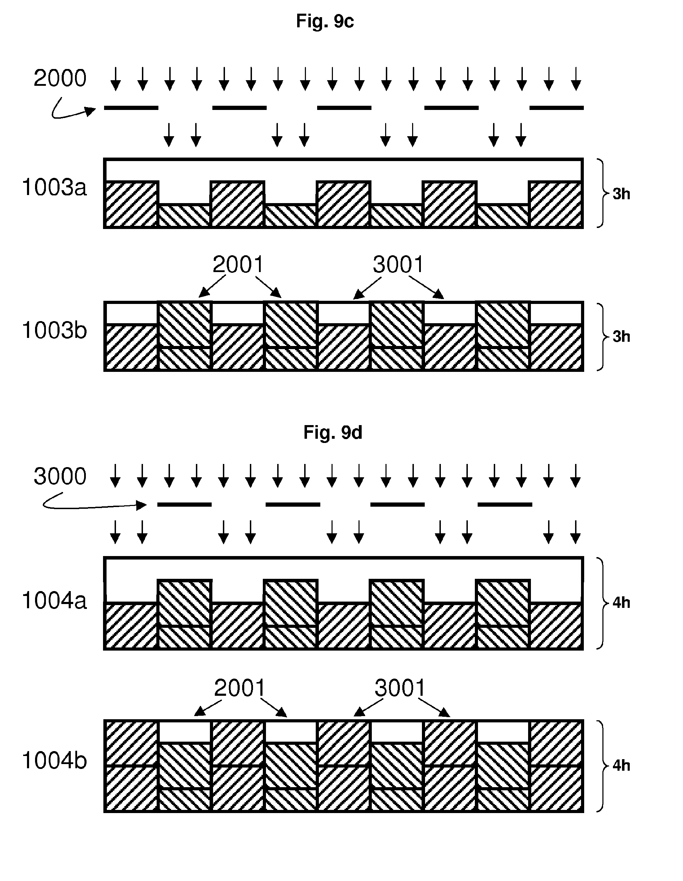

Die generative Herstellung des Formkörpers 27 wird in dieser Weise sukzessive weitergeführt und somit eine dreidimensionale Schichtenstruktur erzeugt, die den Formkörper 27 bildet. Nachdem also, wie in Figur 9c gezeigt, eine dritte Schicht auf der im ersten Teilbereich 2001 noch unverfestigten zweiten Schicht bereitgestellt und so eine Schichtenstruktur 1003a erreicht worden ist, ergibt sich nach dem dritten Belichtungsschritt 1003, bei der wieder die erste Belichtungsmaske 2000 verwendet wird, die Schichtenstruktur 1003b, bei der der erste Teilbereich 2001 der dritten und zweiten Schicht verfestigt ist und der zweite Teilbereich 3001 der zweiten Schicht noch unverfestigt ist.

Nachdem daraufhin, wie in Figur 9d gezeigt, eine vierte Schicht auf der im zweiten Teilbereich 3001 noch unverfestigten dritten Schicht bereitgestellt und so eine Schichtenstruktur 1004a erreicht worden ist, ergibt sich nach dem vierten Belichtungsschritt 1004, bei der wieder die zweite Belichtungsmaske 3000 verwendet wird, die Schichtenstruktur 1004b, bei der der zweite Teilbereich 3001 der vierten und dritten Schicht verfestigt ist und der erste Teilbereich 2001 der vierten Schicht noch unverfestigt ist.

Dies kann über eine Vielzahl von Schichten fortgesetzt werden, um den Formkörper 27 zu bilden. Zur Belichtung der ungeradzahligen bereitgestellten Schichten wird jeweilse die erste Belichtungsmaske 2000 und für die geradzahligen bereitgestellten Schichten wird jeweils die zweite Belichtungsmaske 3000 zur Belichtung verwendet. Dabei ist zu beachten, dass sich die äußere Form und Fläche der auszubildenden Formkörperschicht von Schicht zu Schicht verändern kann, wobei die jeweils belichteten Teilbereiche entsprechend angepasst werden.

Die Verzahnung der Schichten ist an der Schichtenstruktur 1004b deutlich erkennbar. Die Verzahnung wird erfindungsgemäß dadurch erreicht, dass jede Schicht, mit Ausnahme der ersten und letzten Schicht, in einem Teilbereich 2001 zusammen mit der darüber liegenden Schicht und in einem anderen Teilbereich 3001 mit der darunter liegenden Schicht in einem Belichtungsschritt verfestigt wird. Die erste und letzte Schicht wird hierbei jeweils nur in einem der Teilbereiche 2001, 3001 lediglich zusammen mit der nachfolgenden bzw. vorhergehenden Schicht verfestigt.

Die Figuren 10a,b zeigen mit dem gezeigten Ausschnitt einer Draufsicht die jeweils belichtete neue Schicht nach den jeweiligen Belichtungsschritten. In den ungeradzahligen Belichtungsschritten 1001, 1003, 1005, usw. wird die erste Belichtungsmaske 2000 verwendet, die eine schachbrettartige Geometrie aufweist und nur die Belichtung entweder der hellen oder dunklen Felder erlaubt. Im Gegensatz dazu wird in den geradzahligen Belichtungsschritten 1002, 1004, 1006, usw. die zur ersten Belichtungsmaske 2000 komplementäre zweite Belichtungsmaske 3000 verwendet, die eine komplementäre schachbrettartige Geometrie aufweist und nur die Belichtung der jeweils anderen Felder erlaubt. Jede zweite Schicht, die im ersten Teilbereich 2001 belichtet wurde, zeigt also in der Draufsicht die Schichtenstruktur 101b, 103b, 105b, und die dazwischen liegenden Schichten die Schichtenstruktur 102b, 104b, 106b, usw., bei der der zweite Teilbereich 3001 belichtet wurde.

## Patentansprüche

1. Verfahren zur generativen Herstellung eines Formkörpers (27), insbesondere eines Grünlings für eine Dentalrestauration, aus unter Einwirkung von elektromagnetischer Strahlung verfestigbarem Material (5, 55) mittels einer Mehrzahl von Belichtungsschritten (1001, 1002, 1003, 1004), **dadurch gekennzeichnet, dass**
vor einem Belichtungsschritt (1001, 1002, 1003, 1004) eine neue Schicht aus unter Einwirkung von elektromagnetischer Strahlung verfestigbarem Material (5, 55) mit einer Schichtdicke bereitgestellt wird, die kleiner oder gleich der Hälfte der Eindringtiefe der elektromagnetischen Strahlung in das verfestigbare Material (5, 55) ist,
in dem Belichtungsschritt (1001, 1002, 1003, 1004) die bereitgestellte Schicht nur in einem Teilbereich (2001, 3001) der auszubildenden Formkörperschicht belichtet wird, wobei eine vor einem vorhergehenden Belichtungsschritt bereitgestellte Schicht, auf der die neue Schicht bereitgestellt wurde, zusammen mit der neuen Schicht im belichteten Teilbereich (2001, 3001) verfestigt wird, und
zwischen den Belichtungsschritten (1001, 1002, 1003, 1004) der belichtete Teilbereich (2001, 3001) variiert wird.

2. Verfahren nach Anspruch 1, wobei sich die zwischen den Belichtungsschritten (1001, 1002) variierten Teilbereiche (2001, 3001) im Wesentlichen nicht überlagern und zur auszubildenden Formkörperschicht ergänzen.

3. Verfahren nach Anspruch 1 oder 2, wobei ein erster Teilbereich (2001) mit einer ersten Belichtungsmaske (2000) belichtet wird und ein zweiter Teilbereich (3001) mit einer zweiten Belichtungsmaske (3000) belichtet wird, wobei die erste Belichtungsmaske (2000) zur zweiten Belichtungsmaske (3000) im Wesentlichen komplementär ist und in jedem zweiten Belichtungsschritt (1001, 1003) mit einer Belichtungsmaske (2000, 3000) und in den jeweils anderen Belichtungsschritten (1002, 1004) mit der anderen Belichtungsmaske (3000, 2000) belichtet wird.

4. Verfahren nach einem der vorhergehenden Ansprüche, wobei die Schichten eine Schichtdicke von 25 µm oder weniger haben.

5. Verfahren nach einem der vorhergehenden Ansprüche, wobei während eines einzelnen Belichtungsschrittes die Lichtleistung erhöht wird, um ein besseres Durchhärten in größeren Tiefen zu erreichen.

6. Vorrichtung zur generativen Herstellung eines Formkörpers (27), insbesondere eines Grünlings für eine Dentalrestauration, aus unter Einwirkung von elektromagnetischer Strahlung verfestigbarem Material (5, 55) mittels einer Mehrzahl von Belichtungsschritten (1001, 1002, 1003, 1004), mit
einer Belichtungseinheit (10, 60) zum Belichten einer auszubildenden Formkörperschicht mit elektromagnetischer Strahlung,
einer ersten Belichtungsmaske (2000), die nur die Belichtung eines ersten Teilbereichs (2001) der auszubildenden Formkörperschicht erlaubt, und einer zweiten Belichtungsmaske (3000), die nur die Belichtung eines zweiten Teilbereichs (3001) der auszubildenden Formkörperschicht erlaubt, wobei sich der erste Teilbereich (2001) vom zweiten Teilbereich (3001) unterscheidet,
einer Beschichtungseinheit zum Bereitstellen einer neuen Schicht aus unter Einwirkung von elektromagnetischer Strahlung verfestigbarem Material mit einer Schichtdicke, die kleiner oder gleich der Hälfte der Eindringtiefe der elektromagnetischen Strahlung in das verfestigbare Material ist, und
einer Steuereinheit (11, 61), die dazu ausgestaltet und vorbereitet ist, die Vorrichtung so zu steuern, dass in einem Belichtungsschritt (1001, 1002, 1003) eine mit der Beschichtungseinheit zuvor bereitgestellte neue Schicht mit der ersten Belichtungsmaske (2000) belichtet wird und in dem darauffolgenden Belichtungsschritt (1002, 1003, 1004) eine mit der Beschichtungseinheit zuvor bereitgestellte nächste Schicht mit der zweiten Belichtungsmaske (3000) belichtet wird.

7. Vorrichtung nach Anspruch 6, **dadurch gekennzeichnet, dass** die Beschichtungseinheit eine Wanne (4, 54) mit einem wenigstens teilweise lichtdurchlässig ausgebildeten Boden (6, 56) aufweist, in die lichtpolymerisierbares Material (5, 55) einfüllbar ist, dass eine Bauplattform (12, 62) mit einem Hubmechanismus (14, 64) über dem Wannenboden (6, 56) gehalten ist, so dass ihre Höhe relativ zum Wannenboden (6, 56) einstellbar ist, und dass die Steuereinheit (16, 66) dazu vorbereitet ist, nach einem Belichtungsschritt (1001, 1002, 1003, 1004) für eine Schicht die Relativposition der Bauplattform (12, 62) zum Wannenboden (6, 56) durch Steuerung des Hubmechanismus (14, 64) anzupassen.

8. Vorrichtung nach Anspruch 7, **dadurch gekennzeichnet, dass** die Belichtungseinheit (10, 60) unterhalb des Wannenbodens (6, 56) zur Belichtung durch den wenigstens teilweise lichtdurchlässigen Wannenboden (6, 56) hindurch von unten angeordnet ist.

9. Vorrichtung nach Anspruch 7 oder 8, **dadurch gekennzeichnet, dass** in dem Hubmechanismus (14, 64) ein mit der Steuereinheit (11, 61) verbundener Kraftaufnehmer (29, 79) vorhanden ist, der in der Lage ist, die von dem Hubmechanismus (14, 64) auf die Bauplattform (12, 62) ausgeübte Kraft zu messen und das Messergebnis an die Steuereinheit (11, 61) zu senden, wobei die Steuereinheit (11, 61) dazu vorbereitet ist, die Bauplattform (12, 62) mit einem vorgegebenen Kraftverlauf zu bewegen.

10. Vorrichtung nach einem der Ansprüche 6 bis 9, **dadurch gekennzeichnet, dass** die Beschichtungseinheit eine Wanne (4, 54) aufweist, die in horizontaler Richtung beweglich bezüglich der Belichtungseinheit (10, 60) ist und dass eine Aufbringvorrichtung (26, 76), beispielsweise eine Rakel oder eine Rolle, deren Höhe über dem Wannenboden (6, 56) einstellbar ist, in Bewegungsrichtung vor der Belichtungseinheit (10, 60) angeordnet ist.

11. Vorrichtung nach Anspruch 9, **dadurch gekennzeichnet, dass** die Wanne (4) um eine zentrale Drehachse (22) drehbar gelagert ist, wobei die projizierende Belichtungseinheit (10, 60) unter dem Wannenboden (6) und die Bauplattform (12) darüber in radialer Richtung versetzt gegenüber der zentralen Drehachse (22) liegen, dass ein Antrieb (24) vorgesehen ist, der in der Lage ist, unter Steuerung der Steuereinheit (11) die Wanne (4) zwischen aufeinanderfolgenden Belichtungsschritten (1001, 1002, 1003, 1004) um einen vorgegebenen Winkel um die zentrale Drehachse (22) zu drehen, wobei eine Zuführeinrichtung (8) zum Zuführen von lichtpolymerisierbaren Material (5) in die Wanne (4), die Aufbringvorrichtung (26) und die Belichtungseinheit (10) in Bewegungsrichtung aufeinander folgen.

12. Vorrichtung nach Anspruch 11, **dadurch gekennzeichnet, dass** in Drehrichtung hinter dem Bereich der projizierenden Belichtungseinheit (10) ein in vorgebbarer Höhe über dem Wannenboden (6) positionierbarer Wischer (30) vorgesehen ist, der für eine erneute Verteilung des Materials (5) nach dem Verfestigungsprozess im belichteten Teilbereich (2001, 3001) ausgestaltet ist.

13. Vorrichtung nach einem der Ansprüche 6 bis 12, **dadurch gekennzeichnet, dass** als Lichtquelle der Belichtungseinheit (10, 60) Leuchtdioden (23, 73) dienen.

14. Vorrichtung nach Anspruch 12, **dadurch gekennzeichnet, dass** die Leuchtdioden (23, 73) dazu ausgelegt sind, Licht mit unterschiedlichen Lichtwellenlängen zu emittieren.

15. Vorrichtung nach einem der Ansprüche 5 bis 13, **dadurch gekennzeichnet, dass** die Belichtungseinheit (10, 60) Licht mit einer mittleren Intensität von 100 mW/dm² bis 2000 mW/dm², insbesondere 500 mW/dm² bis 2000 mW/dm², emittiert.
